# EUROPÄISCHE PATENTSCHRIFT

(11) **EP 2 761 161 B1**
(45) Veröffentlichungstag und Bekanntmachung des Hinweises auf die Patenterteilung: **12.04.2017**
(21) Anmeldenummer: 12742829.0
(22) Anmeldetag: 17.07.2012
(51) Int. Cl.: F02B 37/18, F02M 25/00

(54) **STELLVORRICHTUNG**
ACTUATING ARRANGEMENT
DISPOSITIF D'ACTIONNEMENT

(30) Priorität: 30.09.2011 DE 102011054082
(43) Veröffentlichungstag der Anmeldung: 06.08.2014
(73) Patentinhaber: Pierburg GmbH, 41460 Neuss (DE)
(72) Erfinder: TÖNNESMANN, Andres, 52066 Aachen (DE); KÖSTER, Andreas, 45149 Essen (DE); NOWAK, Martin, 51379 Leverkusen (DE); SCHÄFER, Michael, 16766 Kremmen (DE); BREUER, Michael, 52152 Simmerath (DE)
(74) Vertreter: Patentanwälte ter Smitten Eberlein Rütten Partnerschaftsgesellschaft
(86) Internationale Anmeldenummer: PCT/EP2012/063978
(87) Internationale Veröffentlichungsnummer: WO 2013/045132

(56) Entgegenhaltungen:
- EP-A2- 1 647 698
- EP-A2- 1 882 843
- WO-A1-2010/146121
- DE-A1-102007 036 286
- DE-A1-102009 003 882
- US-A- 5 593 132

## Beschreibung

Die Erfindung betrifft eine Stellvorrichtung mit einer über einen Aktor bewegbaren Stelleinheit, dessen translatorische Hauptbewegung durch eine Schwenkbewegung überlagert ist, einem translatorisch bewegbaren Sendeelement mit einem magnetischen Feld, das druckbelastet gegen ein erstes Ende der Stelleinheit anliegt, und mit einem fest in einem Gehäuse angeordneten Empfangselement zusammenwirkt.

Derartige Stellvorrichtungen können im Bereich des Kraftfahrzeugbaus in einer Vielzahl von Anwendungen im Bereich des Verbrennungsmotors verwendet werden. So können beispielsweise Abgasrückführventile, Waste-Gate-Ventile, Registerklappen oder VTG-Steller mittels derartiger Stellvorrichtungen angetrieben werden.

Diese Stellvorrichtungen weisen einen Elektromotor als Antriebseinheit auf, über den ein Getriebe und folgend eine Kurbel oder direkt eine Kurbel angetrieben wird. Diese Kurbel ist mit einer Kulisse in einem rotatorisch wirkenden Antriebselement wirkverbunden, über das die Bewegung des Elektromotors in eine im Wesentlichen lineare Bewegung eines Stellelements umgewandelt wird. Im Gegensatz zu linearen, pneumatisch oder elektromagnetisch betätigten Stellern ermöglichen elektromotorische Steller eine feinere Positionierung des nachgeschalteten Stellelementes sowie eine höhere Stellkraft durch Variation des rotatorischen Hebels, was durch ein zwischengeschaltetes Getriebe noch erhöht werden kann.

So wird in der DE 10 2009 003 882 A1 ein Abgasrückführventil vorgeschlagen, bei dem eine Kulisse rotatorisch um die Achse des Elektromotors gedreht wird, wobei in der Kulisse ein Kugellager läuft, welches an einer Ventilstange befestigt ist. Entsprechend vollzieht die Ventilstange eine rein translatorische Bewegung.

Aus verschiedenen Gründen ist es sinnvoll, die rotatorische Bewegung nicht in eine ausschließlich lineare Bewegung des nachgeschalteten Stellelementes umzuwandeln, sondern auch radiale Bewegungsanteile zuzulassen, wodurch Produktions- und Montagekosten gesenkt werden können.

In der US 6 886 546 B1 wird ein rotatorisch betätigtes Hub-Ventil offenbart, dessen Ventilstange nicht ausschließlich translatorisch bewegt und nicht in einem Gleitlager geführt wird, sondern auch radial zur Hauptbewegungsrichtung Bewegungsanteile aufweist.

Um eine derartige Stellvorrichtung wunschgemäß ansteuern zu können, muss die Position des Stellelementes bekannt sein. Dazu wird in der Regel ein Magnet mit einem Hall-Sensor gekoppelt. Die Messung erfolgt kontaktlos und damit verschleißfrei. Die Messung kann direkt am Antrieb oder an Getriebekomponenten angeordnet werden, was den Vorteil hat, dass bei thermisch hochbelasteten Anwendungsgebieten wie Abgasrückführventilen der Magnet und der Hall-Sensor nicht durch die hohen auftretenden Temperaturen beschädigt werden können. Nachteilig an einer solchen Positionierung ist, dass durch Spiel in den Antriebskomponenten die Messungenauigkeit sehr hoch ist. Aus diesem Grund wird versucht, die Position des Stellelementes direkt am Stellelement oder an einem, die lineare Bewegung des Stellelements in gleicher Weise vollziehenden Bauteil zu bestimmen.

In der DE 10 2009 054 311 A1 wird eine Ventilvorrichtung offenbart, in der eine rotatorische Bewegung eines Aktors in eine translatorische Bewegung eines das Ventil stellenden Verstellelements umgewandelt wird, wobei die Position des Stellelements mithilfe eines starr mit dem Verstellelement verbundenen, den Magnet tragenden Trägerelements und einem die Position des Magneten messenden berührungslos arbeitenden Sensors bestimmt wird.

Da aber hier die Bewegung des Stellelementes nicht ausschließlich translatorisch ist, wodurch die Messung mit nur einem Sensor verfälscht werden würde, werden mindestens zwei Sensoren benötigt um zuerst die räumliche Position des Stellelementes zu bestimmen und daraus den translatorischen Anteil zu errechnen. Durch die Verwendung von zwei Sensoren entstehen erhöhte Materialkosten.

Es stellt sich daher die Aufgabe, eine Stellvorrichtung mit einer über einen Aktor bewegbaren Stelleinheit, dessen translatorische Hauptbewegung durch eine Schwenkbewegung überlagert ist, zu schaffen, bei der auf einfache und kostengünstige Art und Weise die exakte Position des Stellelements bestimmt werden kann.

Diese Aufgabe wird durch den kennzeichnenden Teil des Hauptanspruchs gelöst.

Dadurch, dass das erste Ende der Stelleinheit eine kreisbogenförmige Kontur aufweist, dessen Kreisbogen-Mittelachse eine erste Schwenkachse ist, wird nur der translatorische Bewegungsanteil der Stelleinheit gemessen. Die Notwendigkeit zwei Hall-Sensoren zu nutzen, die in zwei zueinander senkrecht stehenden Richtungen die Bewegung des Stellelements messen, entfällt. Das senkt die Materialkosten und vermeidet ein Berechnen des translatorischen Bewegungsanteils. Auch wird die Ausfallsicherheit der Sensoreinheit durch den Wegfall des einen Sensors verdoppelt.

In einer vorteilhaften Ausgestaltung ist die erste Schwenkachse die Mittelachse eines zylindrischen Lagerzapfens. So kann die Schwenkbewegung des Stellelements auf einfache Weise realisiert werden.

In einer vorteilhaften Ausführungsform ist das Sendeelement ein Magnet oder ein Trägerelement mit einem Magnet. Das hat den Vorteil, dass der Magnet sich besonders gut zur berührungslosen Messung eignet und frei im Trägerelement positioniert werden kann, wodurch ein größerer Spielraum für die Positionierung des Empfangselements entsteht.

In einer weiterführenden Variante ist eine kugelkalottenförmige Oberfläche auf dem ersten Ende der Stelleinheit ausgebildet deren Mittelpunkt der Schnittpunkt der ersten Schwenkachse und einer zweiten zur ersten Schwenkachse orthogonalen Schwenkachse ist. Hierdurch können Schwenkbewegungen in alle Richtungen orthogonal zur translatorischen Hauptbewegungsrichtung der Stelleinheit kompensiert werden, um nur den translatorischen Anteil zu messen.

In einer vorteilhaften Ausführungsform ist das erste Ende der Stelleinheit ein Stangenkopf, der an einem Stellelement befestigt ist. Auf der Oberfläche des Stangenkopfs kann besonders leicht die Kontur ausgebildet werden.

Vorzugsweise ist im Gehäuse eine feststehende Führung für das Sendeelement angeordnet. Hierdurch führt der Magnet exakt die translatorische Bewegung der Stelleinheit aus.

In einer optimierten Variante ist die Führung einteilig mit dem Gehäuse ausgebildet. Das senkt die Anzahl der benötigten Teile und dadurch Material- und Montagekosten.

In einer vorteilhaften Ausführungsform ist das Sendeelement von einem elastischen Element direkt oder indirekt gegen das erste Ende der Stelleinheit druckbelastet. Das hat den Vorteil, dass der Magnet immer, auch gegen die Schwerkraft, proportional zur translatorischen Hauptbewegungsrichtung der Stelleinheit bewegt wird.

In einer weiterführenden Variante ist das elastische Element eine Feder. Eine Feder ist korrosionsbeständig und thermisch belastbar.

In einer vorteilhaften Ausführungsform ist das Sendeelement zumindest teilweise hohl ausgebildet und an seiner der Stelleinheit zugewandten Seite verschlossen. Dadurch kann ein Teil der Feder und der Führung im Sendeelement liegen wodurch der benötigte Bauraum verringert wird.

Vorzugsweise umschließt die Feder das Sendeelement. Hierdurch wird die Feder geführt und ein Knicken der Feder wird verhindert.

In einer weiteren Ausführungsform ist die Feder von der Führung zumindest teilweise umschlossen und liegt gegen das Gehäuse an. Das hat den Vorteil, dass die Feder nach außen geschützt ist.

In einer alternativen bevorzugten Ausführungsform ist die Führung von der Feder zumindest teilweise umschlossen. Daran vorteilhaft ist, dass weniger Material und Bauraum für die Führung benötigt wird.

In einer anderen bevorzugten Ausführungsform umschließt das Sendeelement zumindest teilweise die Führung. Dadurch kann das

Sendeelement besonders sicher geführt werden und zugleich nicht mehr an den Windungen der Feder hängen bleiben.

In einer alternativen bevorzugten Ausführungsform umschließt die Führung zumindest teilweise das Sendeelement. Somit lassen sich stabile Führungen realisieren.

In einer vorteilhaften Ausführungsform der Erfindung ist zwischen dem Magneten und der Stelleinheit ein wärmeisolierendes Element angeordnet. Dadurch wird die thermische Belastung des Magneten verringert was seine Haltbarkeit erhöht.

In einer bevorzugten Ausgestaltung weist das Sendeelement an seiner der Stelleinheit zugewandten Seite einen umlaufenden Vorsprung auf, der von der Feder druckbelastet ist. Dadurch kann die Feder die Führung und das Sendeelement umschließen, wodurch die Montage sehr einfach wird.

In einer weiterentwickelten vorteilhaften Ausführungsform ist das wärmeisolierende Element einstückig mit dem Stangenkopf oder einstückig mit dem Sendeelement ausgebildet. Dadurch wird die Zahl der verbauten Teile verringert, wodurch Montagekosten reduziert werden.

In einer weiteren Variante ist der Sensor in dem Gehäuse eingegossen oder eingespritzt. Das hat den Vorteil, dass der Sensor vor Umwelteinflüssen geschützt ist.

Somit wird eine Stellvorrichtung geschaffen, mit der auf kostengünstige und einfache Art und Weise der translatorische Bewegungsanteil der nicht rein translatorischen Bewegung der Stelleinheit, exakt bestimmt werden kann.

Weitere wesentliche Merkmale und eine bevorzugte Ausführungsform wird im Folgenden anhand der Figuren beschrieben.
Figur 1 zeigt eine Seitenansicht einer erfindungsgemäßen Stellvorrichtung in geschnittener Darstellung.

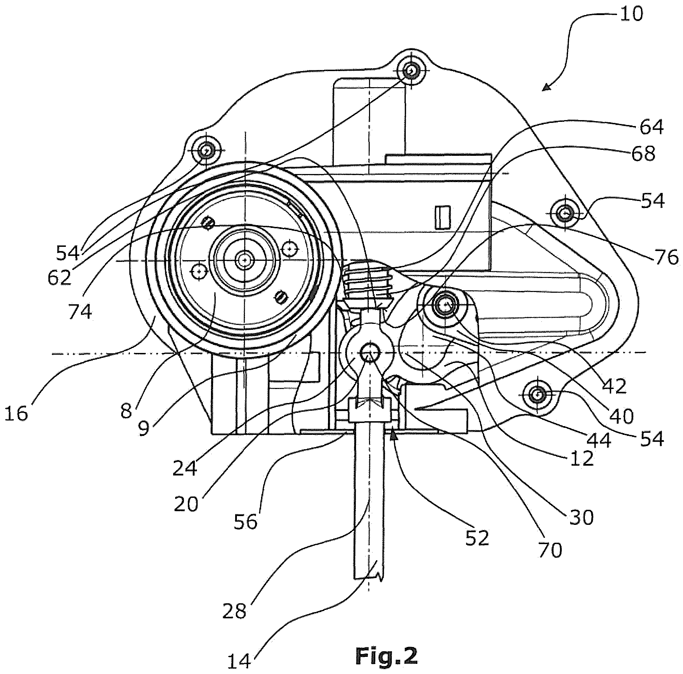

Figur 2 zeigt eine Seitenansicht der erfindungsgemäßen Stellvorrichtung der Figur 1 in teilgeschnittener Darstellung.

Die Stellvorrichtung 10 besteht aus einem zweiteiligen Gehäuse 16, in dem ein als Antriebseinheit 8 dienender Elektromotor in einer entsprechend ausgeformten Aufnahme 9 des Gehäuses 16 angeordnet ist. Das Gehäuse 16 ist zweiteilig ausgebildet, wobei die beiden Gehäusehälften durch Gehäuseschrauben 54 fest miteinander verbunden sind.

Die Antriebseinheit 8 treibt über ein nicht dargestelltes Getriebe eine nicht dargestellte Antriebswelle an, auf der ein Exzenter 40 befestigt ist, an dessen gegenüberliegendem Ende ein Exzenterausgangsbolzen 42 befestigt ist, der parallel zur Antriebswelle verläuft, so dass die Antriebswelle, der Exzenterausgangsbolzen 42 und der Exzenter 40 eine Kurbel bilden.

Auf dem Exzenterausgangsbolzen 42 ist ein nicht dargestelltes Lager angeordnet, das in einer Kulisse 44 eines Antriebelements 12 abläuft.

Das Antriebselement 12 ist im Wesentlichen scheibenförmig ausgebildet und weist an einem ersten nicht sichtbaren Endbereich eine Bohrung auf, durch die eine Drehachse in Form eines in Lagern drehbar gelagerten Bolzens ragt, der fest mit dem Antriebselement 12 verbunden ist, so dass das Antriebselement 12 über die Lager in seiner Erstreckungsebene drehbar gelagert ist.

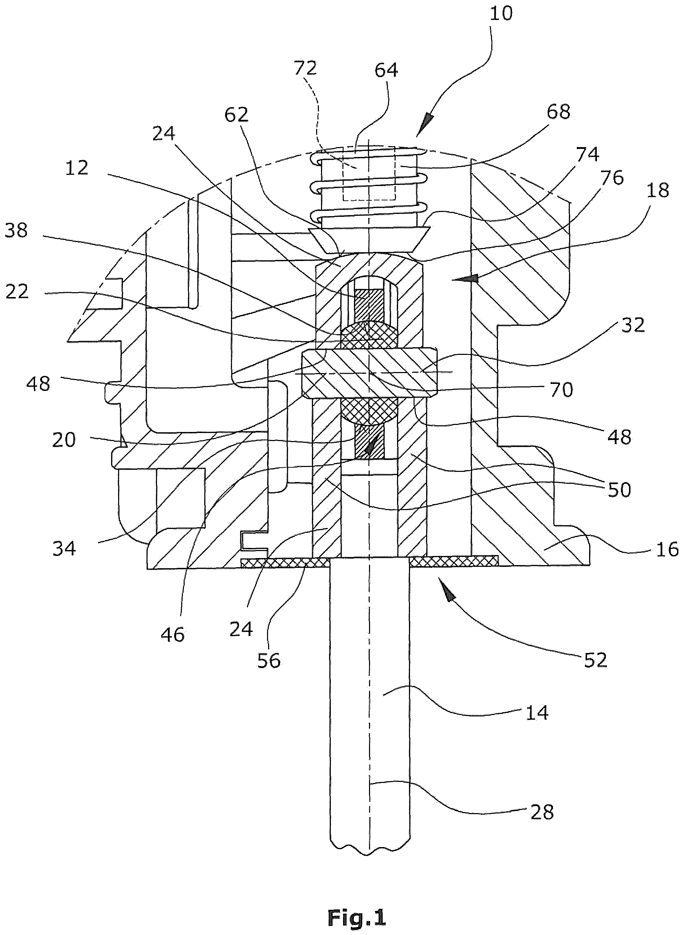

Im Antriebselement 12 ist ein geformtes Durchgangsloch 46 ausgebildet, das eine kreisbogenförmige Innenkontur 38 aufweist, wie in Figur 1 dargestellt ist. In diesem geformten Durchgangsloch 46 ist eine kugelringförmige Buchse 22 aus Kunststoff angeordnet, die eine, zur kreisbogenförmigen Innenkontur 38 des geformten Durchgangslochs 46 korrespondierende Außenkontur 34 aufweist, wodurch die Buchse 22 im geformten Durchgangsloch 46 im Antriebselement 12 um die Schwenkachse 30 schwenkbar gelagert ist, wodurch fertigungsbedingter und Spannung erzeugender Versatz zwischen Stellvorrichtung und über ein Stellelement 14 zu aktuierende Ventil kompensiert werden kann.

In der Buchse 22 ist ein zylindrischer Lagerzapfen 20 drehbar angeordnet, der dieselbe Mittelachse 28 wie die Buchse 22 aufweist. Der Lagerzapfen 20 ragt beidseitig in Bohrungen 48 in Schenkeln 50 eines U-förmig ausgebildeten Stangenkopfes 24 und ist mit diesem fest verbunden. Die Buchse 22 ist gegen axiales Verschieben durch die beidseitig an der Buchse anliegenden Schenkel 50 des Stangenkopfes 24 gesichert.

Das Stellelement 14 ragt mit seinem, zum Stangenkopf 24 entgegengesetzten Ende durch eine Gehäuseöffnung 52 nach außen. Die Gehäuseöffnung 52 ist im Wesentlichen als Durchgangsbohrung ausgeführt, deren Durchmesser jedoch größer ist als der Durchmesser des Stellelements 14, so dass dieses in der Gehäuseöffnung 52 eine Kippbewegung ausführen kann. Die Gehäuseöffnung 52 ist durch einen in der Gehäuseöffnung 52 im Gehäuse 16 fixierten Elastomerring 56 verschlossen der das Stellelement 14 radial umschließt und zugleich die Kippbewegung des Stellelements 14 zulässt.

Eine Oberfläche 62 des Stangenkopfes 24 ist kugelkalottenförmig ausgebildet, wobei ein Mittelpunkt 70 der kugelkalottenförmigen Oberfläche 62 der Schnittpunkt der Schwenkachsen 30 und 32 ist. Die Oberfläche 62 ist durch ein Trägerelement 68 in Richtung des Stellelements 14 druckbelastet, wobei das Trägerelement 68 eine im Gehäuse 16 ausgebildete, nicht dargestellte Führung umschließt und translatorisch entsprechend der Hauptbewegungsrichtung des Stellelements 14 bewegbar ist und zumindest einen Magneten 72 enthält. Eine Feder 64 in Form einer Schraubenfeder ist das Trägerelement 68 und die Führung umhüllend im Gehäuse 16 angeordnet, wobei das eine Ende der Feder 64 gegen das Gehäuse 16 anliegt und das andere Ende auf einem umlaufenden Vorsprung 74 des Trägerelements 68 aufliegt, so dass das Trägerelement 68 in Richtung des Stangenkopfes 24 gedrückt wird. Die die Oberfläche 62 des Stangenkopfes 24 druckbelastende Oberfläche 76 des Trägerelements 68 ist plan ausgeführt. Im Gehäuse 16 ist ein nicht dargestelltes Empfangselement in Form eines Hall-Sensors angeordnet, das die Position des Magneten 72 misst, wodurch in bekannter Weise die Position des Stellelements 14 bestimmt wird.

Wird nun die Antriebseinheit 8 betätigt, wird über das Getriebe die Antriebswelle und mit ihr der Exzenter 40 rotatorisch betätigt. Damit bewegt sich der Exzenterausgangsbolzen 42 auf einem Kreisbogen um die Antriebswelle, wobei das auf dem Exzenterausgangsbolzen 42 angeordnete Lager in der Kulisse 44 abläuft, wodurch das Antriebselement 12 um seine Drehachse gedreht wird. Die in dem geformten Durchgangsloch 46 im Antriebselement 12 geführte Buchse 22 wird dadurch auf einer Kreisbogenbahn um die Drehachse des Antriebselements 12 bewegt.

Die Drehachse und die Buchse 22 sind derart angeordnet, dass die Kreisbogenbahn, entlang der sich die Buchse 22 bewegt, eine deutlich größere Komponente in der Hauptbewegungsrichtung des Stellelements 14 aufweist, als in einer senkrecht hierzu stehenden Richtung. Entsprechend wird das Stellelement 14 über den Stangenkopf 24 und die Buchse 22 entlang der Mittelachse 28 bewegt. Es entsteht jedoch gleichzeitig durch die Kreisbogenbahn eine geringe Kippbewegung um eine Schwenkachse 32.

Da die Oberfläche 62 des Stangenkopfes 24 eine kugelkalottenförmige Kontur aufweist, um deren Mittelpunkt 70 die Stelleinheit 18 schwenkt, wird durch das Schwenken keine Verschiebung des Trägerelements 68 bewirkt. Lediglich die translatorische Hauptbewegung wird auf das Trägerelement 68 übertragen und mit Hilfe des Hall-Sensors gemessen. In gleicher Weise wird eine Schwenkbewegung um die Schwenkachse 30, die durch Fertigungs- und Montagetoleranzen entstehen kann, durch die Oberfläche ausgeglichen.

So entsteht eine exakte Messung des Verstellweges des Stellelementes mit nur einem Sensor.

Es sollte deutlich sein, dass der Schutzbereich der vorliegenden Anmeldung nicht auf das beschriebene Ausführungsbeispiel beschränkt ist. Insbesondere sind verschiedene Verwendungen für die Stellvorrichtung denkbar, welche auch konstruktiv änderbar ist. Entsprechend sollte deutlich sein, dass jede von einer Schwenkbewegung überlagerte translatorische Bewegung eines Elements auf diese Art durch entsprechende Ausformung des Auflagepunktes detektiert werden kann.

## Patentansprüche

1. Stellvorrichtung (10) mit
einer über einen Aktor bewegbaren Stelleinheit (18), dessen translatorische Hauptbewegung durch eine Schwenkbewegung überlagert ist,
einem translatorisch bewegbaren Sendeelement mit einem magnetischen Feld, das druckbelastet gegen ein erstes Ende der Stelleinheit (18) anliegt, und mit einem fest in einem Gehäuse (16) angeordneten Empfangselement zusammenwirkt,
**dadurch gekennzeichnet, dass**
das erste Ende der Stelleinheit (18) eine kreisbogenförmige Kontur (62) aufweist, dessen Kreisbogen-Mittelachse eine erste Schwenkachse (32) ist.

2. Stellvorrichtung (10) nach Anspruch 1,
**dadurch gekennzeichnet, dass**
die erste Schwenkachse (32) die Mittelachse eines zylindrischen Lagerzapfens (20) ist.

3. Stellvorrichtung (10) nach Ansprüchen 2,
**dadurch gekennzeichnet, dass**
das Sendeelement ein Magnet (72) oder ein Trägerelement (68) mit einem Magnet (72) ist.

4. Stellvorrichtung (10) nach einem der vorhergehenden Ansprüche,
**dadurch gekennzeichnet, dass**
eine kugelkalottenförmige Oberfläche (62) am ersten Ende der Stelleinheit (18) ausgebildet ist, deren Mittelpunkt (70) der Schnittpunkt der ersten Schwenkachse (32) und einer zweiten zur ersten Schwenkachse (32) orthogonalen Schwenkachse (30) ist.

5. Stellvorrichtung (10) nach einem der vorhergehenden Ansprüche,
**dadurch gekennzeichnet, dass**
das erste Ende der Stelleinheit (18) ein Stangenkopf (24) ist, der an einem Stellelement (14) befestigt ist.

6. Stellvorrichtung (10) nach einem der vorhergehenden Ansprüche,
**dadurch gekennzeichnet, dass**
im Gehäuse (16) eine feststehende Führung für das Sendeelement angeordnet ist.

7. Stellvorrichtung (10) nach Anspruch 6,
**dadurch gekennzeichnet, dass**
die Führung einteilig mit dem Gehäuse (16) ausgebildet ist.

8. Stellvorrichtung (10) nach Anspruch 7,
**dadurch gekennzeichnet, dass**
das Sendeelement von einem elastischen Element direkt oder indirekt gegen das erste Ende der Stelleinheit (18) druckbelastet ist.

9. Stellvorrichtung (10) nach Anspruch 8,
**dadurch gekennzeichnet, dass**
das elastische Element eine Feder (64) ist.

10. Stellvorrichtung (10) nach einem der vorhergehenden Ansprüchen, **dadurch gekennzeichnet, dass**
das Sendeelement zumindest teilweise hohl ausgebildet ist und an seiner der Stelleinheit (18) zugewandten Seite verschlossen ist.

11. Stellvorrichtung (10) nach einem der Ansprüche 9 oder 10
**dadurch gekennzeichnet, dass**
die Feder (64) von der Führung zumindest teilweise umschlossen ist und gegen das Gehäuse (16) anliegt.

12. Stellvorrichtung (10) nach einem Ansprüche 9 oder 10,
**dadurch gekennzeichnet, dass**
die Führung von der Feder (64) zumindest teilweise umschlossen ist.

13. Stellvorrichtung (10) nach Anspruch 11 oder 12,
**dadurch gekennzeichnet, dass**
das Sendeelement zumindest teilweise die Führung umschließt.

14. Stellvorrichtung (10) nach Anspruch 11 oder 12,
**dadurch gekennzeichnet, dass**
die Führung zumindest teilweise das Sendeelement umschließt.

15. Stellvorrichtung (10) nach Anspruch 13 oder 14,
**dadurch gekennzeichnet, dass**
das Sendeelement an seiner der Stelleinheit (18) zugewandten Seite einen umlaufenden Vorsprung (74) aufweist, der von der Feder (64) druckbelastet ist.

16. Stellvorrichtung nach einem der vorhergehenden Ansprüche,
**dadurch gekennzeichnet, dass**
zwischen dem Magneten (72) und der Stelleinheit (18) ein wärmeisolierendes Element angeordnet ist.

17. Stellvorrichtung nach Anspruch 16,
**dadurch gekennzeichnet, dass**
das wärmeisolierende Element einstückig mit dem Stangenkopf (24) oder einstückig mit dem Sendeelement ausgebildet ist.

18. Stellvorrichtung nach einem der vorhergehenden Ansprüche,
**dadurch gekennzeichnet, dass**
das Empfangselement in dem Gehäuse (16) eingegossen oder eingespritzt ist.

## Claims

1. An actuating apparatus (10) comprising
an actuating unit (18) which can be moved via an actuator, the translational main movement thereof being superimposed by a pivoting movement,
a translationally movable transmitter element having a magnetic field, the element being biased to bear against a first end of the actuating unit (18), and cooperating with a receiver element fixedly arranged in the housing (16),
**characterized in that**
the first end of the actuating unit (18) has a circular arc-shaped contour (62) whose circular arc central axis is a first pivot axis (32).

2. The actuating device (10) of claim 1, **characterized in that** the first pivot axis (32) is the central axis of a cylindrical bearing pin (20).

3. The actuating device (10) of claim 2, **characterized in that** the transmitter element is a magnet (72) or a carrier element (68) with a magnet (72).

4. The actuating device (10) of one of the preceding claims, **characterized in that** a spherical segment-shaped surface (62) is formed at the first end of the actuating unit (18), the centre (70) thereof being the intersection of the first pivot axis (32) and a second pivot axis (30) orthogonal to the first pivot axis (32).

5. The actuating device (10) of one of the preceding claims, **characterized in that** the first end of the actuating unit (18) is a rod head (24) fixed to an actuating element (14).

6. The actuating device (10) of one of the preceding claims, **characterized in that** a stationary guide for the transmitter element is arranged in the housing (16).

7. The actuating device (10) of claim 6, **characterized in that** the guide is formed integrally with the housing (16).

8. The actuating device (10) of claim 7, **characterized in that** the transmitter element is biased by a resilient element directly or indirectly against the first end of the actuating unit (18).

9. The actuating device (10) of claim 8, **characterized in that** the resilient element is a spring (64).

10. The actuating device (10) of one of the preceding claims, **characterized in that** the transmitter element is at least partially hollow and is closed at its side facing the actuating unit (18).

11. The actuating device (10) of one of claims 9 or 10, **characterized in that** the spring (64) is at least partially surrounded by the guide and abuts against the housing (16).

12. The actuating device (10) of one of claims 9 or 10, **characterized in that** the guide is at least partially surrounded by the spring (64)

13. The actuating device (10) of one of claims 11 or 12, **characterized in that** the transmitter element surrounds the guide at least partially.

14. The actuating device (10) of one of claims 11 or 12, **characterized in that** the guide encloses the transmitter element at least partially.

15. The actuating device (10) of one of claims 13 or 14, **characterized in that** the transmitter element has a circumferential protrusion (74) along its side facing the actuating unit (18), the protrusion being biased by the spring (64).

16. The actuating device of one of the preceding claims, **characterized in that** a thermally insulating element is provided between the magnet (72) and the actuating unit (18).

17. The actuating device of claim 16, **characterized in that** the thermally insulating element is formed integrally with the rod head (24) or with the transmitter element.

18. The actuating device of one of the preceding claims, **characterized in that** the receiving element is cast or injection molded into the housing (16).

## Revendications

1. Dispositif d'actionnement (10) comprenant
une unité d'actionnement (18) mobile par un actionneur, dont le mouvement de translation principal est superposé par un mouvement pivotant,
un élément transmetteur, apte à être déplacé en translation, avec un champ magnétique, ledit élément s'appuyant, sollicité par une pression, sur une première extrémité de l'unité d'actionnement (18), et coopérant avec un élément récepteur disposé de manière fixe dans un carter (16),
**caractérisé en ce que**
la première extrémité de l'unité d'actionnement (18) a un contour (62) en arc de cercle, dont l'axe central de l'arc de cercle est un premier axe de pivotement (32).

2. Dispositif d'actionnement (10) selon la revendication 1, **caractérisé en ce que** le premier axe de pivotement (32) es l'axe central d'un tourillon (10).

3. Dispositif d'actionnement (10) selon la revendication 2, **caractérisé en ce que** l'élément transmetteur est un aimant (72) ou un élément porteur (68) avec un aimant (72).

4. Dispositif d'actionnement (10) selon l'une quelconque des revendications précédentes, **caractérisé en ce qu'**une surface (62) en forme d'une calotte sphérique est formée à la première extrémité de l'unité d'actionnement (18), dont le centre (70) est l'intersection du premier axe de pivotement (32) et d'un deuxième axe de pivotement (30) orthogonal au premier axe de pivotement (32).

5. Dispositif d'actionnement (10) selon l'une quelconque des revendications précédentes, **caractérisé en ce que** la première extrémité de l'unité d'actionnement (18) est une tête de tige (24) fixée sur un élément d'actionnement (14).

6. Dispositif d'actionnement (10) selon l'une quelconque des revendications précédentes, **caractérisé en ce qu'**un guide fixe pour l'élément transmetteur est disposé dans le carter (16).

7. Dispositif d'actionnement (10) selon la revendication 6, **caractérisé en ce que** le guide est formé d'un seul tenant avec le carter (16).

8. Dispositif d'actionnement (10) selon la revendication 7, **caractérisé en ce que** l'élément transmetteur est sollicité sous pression par un élément élastique directement ou indirectement contre la première extrémité de l'unité d'actionnement (18).

9. Dispositif d'actionnement (10) selon la revendication 8, **caractérisé en ce que** l'élément élastique est un ressort (64).

10. Dispositif d'actionnement (10) selon l'une quelconque des revendications précédentes, **caractérisé en ce que** l'élément transmetteur est au moins partiellement creux et qu'il est fermé à son côté tourné vers l'unité d'actionnement (18).

11. Dispositif d'actionnement (10) selon l'une quelconque des revendications 9 ou 10, **caractérisé en ce que** le ressort (64) est au moins partiellement enfermé par le guide et s'appuie sur le carter (16).

12. Dispositif d'actionnement (10) selon l'une quelconque des revendications 9 ou 10, **caractérisé en ce que** le guide est au moins partiellement enfermé par le ressort (64).

13. Dispositif d'actionnement (10) selon l'une quelconque des revendications 11 ou 12, **caractérisé en ce que** l'élément transmetteur enferme le guide au moins partiellement.

14. Dispositif d'actionnement (10) selon l'une quelconque des revendications 11 ou 12, **caractérisé en ce que** le guide enferme l'élément transmetteur au moins partiellement.

15. Dispositif d'actionnement (10) selon l'une quelconque des revendications 13 ou 14, **caractérisé en ce que** l'élément transmetteur comprend une saillie (74) circonférentielle sur son côté tourné vers l'unité d'actionnement (18).

16. Dispositif d'actionnement (10) selon l'une quelconque des revendications précédentes, **caractérisé en ce qu'**un élément thermiquement isolant est disposé entre l'aimant (72) et l'unité d'actionnement (18).

17. Dispositif d'actionnement (10) selon la revendication 16, **caractérisé en ce que** ledit élément thermiquement isolant est formé d'un seul tenant avec la tête de tige (24) ou d'un seul tenant avec l'élément transmetteur.

18. Dispositif d'actionnement (10) selon l'une quelconque des revendications précédentes, **caractérisé en ce que** l'élément récepteur est moulé ou injecté dans le carter (16).
